# EUROPÄISCHE PATENTANMELDUNG

(11) **EP 3 786 484 A1**
(43) Veröffentlichungstag der Anmeldung: **03.03.2021**
(21) Anmeldenummer: 19194453.7
(22) Anmeldetag: 29.08.2019
(51) Int. Cl.: F16H 57/025

(54) **ANTRIEBSVORRICHTUNG FÜR EINE STÜTZE**

(71) Anmelder: Voithofer, Paul, 4400 Steyr (AT)
(72) Erfinder: Voithofer, Paul, 4400 Steyr (AT)
(74) Vertreter: Hoefer & Partner Patentanwälte mbB

(57) **Zusammenfassung**

Die Erfindung betrifft eine Antriebsvorrichtung (1) für eine über ein, mit einem Drehmomentaufnahmebereich (10) versehenes, Spindelelement (3) ausfahrbare Stütze (2), die Antriebsvorrichtung (1) aufweisend: eine Halteplatte (4), die eingerichtet ist, an der Stütze (3) oder an einer die Stütze haltenden Basis (14) befestigt zu werden, eine Motorvorrichtung (5) zum Ausgeben eines Drehmoments, wobei die Motorvorrichtung (5) an der Halteplatte (4) befestigbar ist, und ein Kraftübertragungselement (6), das eingerichtet ist, an einem dem Drehmomentaufnahmebereich (10) gegenüberliegenden Ende (11) des Spindelelements (3) formschlüssig und/oder stoffschlüssig und/oder kraftschlüssig verbunden zu werden, um ein Drehmoment auf das Spindelelement (3) aufzubringen, wobei das Kraftübertragungselement (6) mit einer Ausgangswelle (7) der Motorvorrichtung (5) zur Drehmomentübertragung gekoppelt ist.

## Beschreibung

Die Erfindung betrifft eine Antriebsvorrichtung für eine Stütze. Die Stütze kann insbesondere zum Abstützen von Wohnwägen verwendet werden, eignet sich aber auch für alle andere Arten von abzustützenden Geräten.

Aus dem Stand der Technik sind Stützen bekannt, die beispielsweise für Wohnwägen verwendet werden können. Eine solche Stütze ist beispielsweise in der DE 1 900 093 U beschrieben. Die Stütze weist eine Spindel auf, auf die ein Benutzer über einen Sechskantzapfen Drehmoment aufbringen kann. Wird die Spindel rotiert, so bewegt sich ein Halter der Stütze, der über eine Spindelmutter mit der Spindel verbunden ist. Dadurch lässt sich die Stütze einfahren und ausfahren.

Es ist Aufgabe der Erfindung eine Antriebsvorrichtung bereitzustellen, die einfach und aufwandsarm an bekannten Stützen angeordnet werden kann.

Die Lösung dieser Aufgabe erfolgt durch die Merkmale des Anspruchs 1. Die Unteransprüche haben bevorzugte Weiterbildungen der Erfindung zum Inhalt.

Somit wird die Aufgabe gelöst durch eine Antriebsvorrichtung, die für eine rückwärtige Anordnung an einer Stütze geeignet ist. Die Stütze weist ein Spindelelement auf, das bei Rotation eine Spindelmutter verschiebt, wodurch die Stütze ausfahrbar und einfahrbar ist. Damit ein Benutzer ein Drehmoment auf das Spindelelement aufbringen kann, ist an einem Ende ein Drehmomentaufnahmebereich vorgesehen, der üblicherweise die Form eines Mehrkants, beispielsweise eines Vierkants oder Sechskants, hat. Somit kann eine Kurbel oder dergleichen angesetzt werden, um das Spindelelement zu rotieren. Die erfindungsgemäße Antriebsvorrichtung ist vorgesehen, an einem gegenüberliegenden Ende der Spindel, das dem Drehmomentaufnahmebereich gegenüberliegt, anzugreifen. Somit ist die Antriebsvorrichtung vorteilhafterweise an verschiedenen bereits vorhandenen Stützen nachrüstbar. Auch ist eine Betriebssicherheit maximiert, da die Antriebsvorrichtung einen maximalen Abstand zu einem Benutzer aufweist.

Die erfindungsgemäße Antriebsvorrichtung weist eine Halteplatte und eine Motorvorrichtung auf. Die Halteplatte ist eingerichtet an der Stütze oder an einer die Stütze haltenden Basis befestigt zu werden. Insbesondere weist die Halteplatte dazu zumindest eine Öffnung auf, durch die eine Schraube hindurchgeführt werden kann. Außerdem ist die Halteplatte ausgebildet, die Motorvorrichtung zu tragen, sodass die Motorvorrichtung an der Halteplatte befestigbar ist. Die Halteplatte kann in einer Ausführungsform biegeweich ausgestaltet sein, um somit einen Toleranzausgleich, insbesondere im Betrieb der Antriebsvorrichtung, zu ermöglichen. Die Motorvorrichtung dient zum Ausgeben eines Drehmoments, das zum Antrieb des Spindelelements dient.

Die Antriebsvorrichtung weist weiterhin ein Kraftübertragungselement auf. Dieses dient zur Anbindung der Antriebsvorrichtung an die Stütze. So ist das Kraftübertragungselement eingerichtet, an einem dem Drehmomentaufnahmebereich gegenüberliegenden Ende des Spindelelements verbunden zu werden. Die Verbindung kann formschlüssig und/oder stoffschlüssig und/oder kraftschlüssig erfolgen, wobei vorgesehen ist, dass über diese Verbindung ein Drehmoment auf das Spindelelement übertragbar ist, um das Spindelelement zu rotieren. Dadurch kann die Spindelmutter bewegt werden, was zu einem Einfahren oder Ausfahren der Stütze führt. Mit anderen Worten ist somit die Stütze durch die Antriebsvorrichtung motorisiert und kann mittels der Antriebsvorrichtung eingefahren und ausgefahren werden. Eine manuelle Betätigung über den Drehmomentaufnahmebereich ist nicht mehr notwendig, weiterhin aber möglich.

Das Kraftübertragungselement ist außerdem zur Drehmomentübertragung mit einer Ausgangswelle der Motorvorrichtung gekoppelt. Somit kann die Motorvorrichtung über das Kraftübertragungselement das Spindelelement rotieren. Besonders vorteilhaft ist die Kopplung zwischen Ausgangswelle der Motorvorrichtung und dem Kraftübertragungselement toleranzausgleichend ausgelegt. Somit lassen sich insbesondere Unwuchten verschiedener Spindelelemente ausgleichen, wodurch ein zuverlässiger Antrieb der Spindelelemente gewährleistet ist, auch wenn die Stütze aufgrund geringwertiger Qualität Unwuchten oder große Rundlauftoleranzen aufweist.

Ein großer Vorteil der erfindungsgemäßen Antriebsvorrichtung ist, dass die Stütze nicht modifiziert werden muss. Durch das Befestigen des Kraftübertragungselements am gegenüberliegenden Ende des Drehmomentaufnahmebereich, d.h. am rückwärtigen Ende, ist eine Drehmomenteinleitung in das Spindelelement einfach und aufwandsarm ermöglicht. Das Kraftübertragungselement kann auf das vorhandene Spindelelement aufgebracht werden, ohne dass das Spindelelement zuvor modifiziert werden muss. Damit ist die Antriebsvorrichtung auch universell zur Nachrüstung von Stützen geeignet, wobei das Anbringen der Antriebsvorrichtung einfach und aufwandsarm erfolgt.

Bevorzugt weist das Kraftübertragungselement zumindest ein Klemmelement auf. Bei dem Klemmelement handelt es sich insbesondere um eine Schraube, bevorzugt um eine Madenschraube. Durch das Klemmelement ist eine reibschlüssige Verbindung zwischen Kraftübertragungselement und Spindelelement erreicht. Alternativ oder zusätzlich kann vorgesehen sein, dass durch das Klemmelement eine Verformung des Spindelelements zu erreichen ist, was zu einer formschlüssigen Verbindung zwischen Kraftübertragungselement und Spindelelement führt. Hierzu können die Schrauben, insbesondere die Madenschrauben, bevorzugt konisch zulaufende Enden aufweisen, die zumindest teilweise in das Spindelelement eindringen damit verformen können. Durch die Verformung ist somit, alternativ oder zusätzlich zu der reibschlüssigen Verbindung, eine formschlüssige Verbindung erreicht.

Das Kraftübertragungselement ist in einer vorteilhaften Ausführungsform als Verbindungswelle, insbesondere Hohlwelle, ausgebildet. Somit ist erreicht, dass die Ausgangswelle der Motorvorrichtung direkt mit dem Spindelelement verbindbar ist, um eine Drehmomentübertragung zu erreichen. Dazu weisen die Verbindungswelle und die Ausgangswelle bevorzugt eine identische Mittelachse auf. Somit ist eine einfach und kostengünstige Verbindung zwischen Ausgangswelle und Motorvorrichtung hergestellt.

In einer weiteren bevorzugten Ausgestaltung weist das Kraftübertragungselement ein Kettenrad und/oder ein Riemenrad auf. Die Kopplung mit der Ausgangswelle der Motorvorrichtung erfolgt in diesem Fall über einen Kettentrieb und/oder einen Riementrieb. Der Kettentrieb und/oder der Riementrieb haben insbesondere den Vorteil, dass diese eine Rundlauftoleranz oder eine Unwucht in der Rotation des Spindelelements ausgleichen können. Somit lassen sich auch Stützen von geringer Qualität mit der Antriebsvorrichtung ausrüsten oder nachrüsten, wobei ein zuverlässiger Antrieb des Spindelelements gewährleistet ist.

Die Halteplatte ist vorteilhafterweise L-förmig ausgebildet. Außerdem weist die Halteplatte bevorzugt ein Montageteil zur Befestigung an der Stütze oder der Basis sowie ein Motorhalteteil zur Aufnahme der Motorvorrichtung auf. Die Halteplatte ist damit bevorzugt zweigeteilt, wobei die zwei Teile der Halteplatte aneinander befestigt sind, insbesondere durch eine oder mehrere Verschraubungen. Das Montageteil und das Motorhalteteil sind zur Einstellung eines Abstands zwischen Ausgangswelle und Spindelelement relativ zueinander verschiebbar. Außerdem sind das Montageteil und das Motorhalteteil aneinander feststellbar, um eine feste Anbindung der Motorvorrichtung an die Basis oder an die Stütze zu erreichen. Durch die Einstellbarkeit des Abstands zwischen Ausgangswelle und Spindelelement ist die Antriebsvorrichtung flexibel an vorhandene Stützen anpassbar, sodass eine Nachrüstung der Antriebsvorrichtung an verschiedene Stützen ermöglicht ist. Zudem kann bei Ausfall des Antriebssystems der Antrieb einfach von der Stütze getrennt werden, so dass der manuelle Betrieb einfach erfolgen kann.

Das Montageteil und das Motorhalteteil sind vorteilhafterweise über eine Verschraubung verbunden. Um dabei die beschriebene relative Verschiebbarkeit zwischen Montageteil und Motorhalteteil zu erreichen ist vorgesehen, dass das Montageteil und/oder das Motorhalteteil zumindest ein Langloch aufweist, über das die Verschraubung erfolgt. Damit ist erreicht, dass einerseits eine relative Verschiebung vorhanden ist, wenn die Verschraubung gelockert ist, andererseits sind Montageteil und Motorhalteteil aneinander feststellbar, wenn die Einstellung des Abstands zwischen Ausgangswelle und Spindelelement abgeschlossen ist.

Die Antriebsvorrichtung weist bevorzugt eine Abstandsplatte auf. An der Abstandsplatte sind die Ausgangswelle und das Spindelelement lagerbar. Insbesondere verlaufen die Ausgangswelle und das Spindelelement dazu durch jeweilige Öffnungen der Abstandsplatte. Durch die Abstandsplatte ist somit ein Abstand zwischen Ausgangswelle und Spindelelement festgelegt. In einer bevorzugt vorgesehenen Ausgestaltung ist das Kraftübertragungselement zwischen der Abstandsplatte und der Halteplatte angeordnet. Somit kann sowohl durch die Halteplatte als auch durch die Abstandsplatte der Abstand zwischen Ausgangswelle und Spindelelement festgelegt werden. Da diese Festlegung an unterschiedlichen Punkten erfolgt, insbesondere auf beiden Seiten des Kraftübertragungselements, ist somit einerseits eine Parallelität von Ausganswelle und Spindelelement, zumindest im Bereich des Kraftübertragungselements, erreicht. Bevorzugt wird dadurch eine boxartige Struktur erreicht, die hohe Stabilität aufweist. Insbesondere im Fall des Kettentriebs und/oder Riementriebs kann dadurch erreicht werden, dass ein geschlossener Kraftfluss um den Kettentrieb und/oder Riementrieb herum vorhanden ist, um eine Vorspannung der Kette und/oder des Riemens optimal einzustellen. Insbesondere ist dadurch ermöglicht, eine für den Betrieb vorgesehene Mindestvorspannung nicht zu unterschreiten.

Die Ausgangswelle und das Spindelelement sind vorteilhafterweise über jeweils ein Gleitlager an der Abstandsplatte gelagert. Dadurch ist eine Reibung aufgrund der Lagerung an der Abstandplatte minimiert. Die Antriebsvorrichtung weist somit geringe Verluste auf.

Die Motorvorrichtung weist bevorzugt einen Elektromotor auf, der direkt mit einem Getriebe verbunden ist. Die Ausgangswelle der Motorvorrichtung ist dadurch bevorzugt ein Ausgang des Getriebes. Das Getriebe ist vorteilhafterweise ein Winkelgetriebe, sodass der Ausgang des Elektromotors und der Ausgang des Getriebes zueinander gewinkelt orientiert sind, insbesondere um 90°. Dadurch lässt sich die Antriebsvorrichtung platzsparend aufbauen. Außerdem ist eine stabile Anbindung der Motorvorrichtung an die Stütze oder die Basis durch die Halteplatte erreichbar.

Die Erfindung betrifft bevorzugt außerdem eine Stützenanordnung. Die Stützenanordnung weist eine Antriebsvorrichtung wie zuvor beschrieben und eine Stütze auf, wobei die Stütze durch die Antriebsvorrichtung motorisiert ist und dadurch durch die Antriebsvorrichtung eingefahren und ausgefahren werden kann. Die Stütze weist dazu ein Spindelelement auf, wobei das Spindelelement an einem Ende einen Drehmomentaufnahmebereich aufweist. Der Drehmomentaufnahmebereich ist bevorzugt eine Mehrkantfläche, beispielsweise ein Vierkant oder ein Sechskant. Dadurch kann ein Benutzer an dem Drehmomentaufnahmebereich angreifen, beispielsweise mit einer Kurbel, um das Spindelelement zu rotieren. An einem dem Drehmomentaufnahmebereich gegenüberliegenden Ende des Spindelelements ist außerdem das Kraftübertragungselement der Antriebsvorrichtung (1) angebracht. Somit kann das Spindelelement, von der einen Seite manuell und von der anderen Seite motorisiert rotiert werden. Die Stütze und Antriebsvorrichtung sind insbesondere an einer gemeinsamen Basis befestigt. Bei der Basis kann es sich insbesondere um ein Fahrgestell eines Wohnwagens oder eines anderen Fahrzeugs handeln. Durch die rückseitige Anbringung der Antriebsvorrichtung ist insbesondere erreicht, dass die Antriebsvorrichtung einen maximalen Abstand zu einem Benutzer aufweist, der manuell nur an dem Drehmomentaufnahmebereich und damit an der gegenüberliegenden Seite der Spindel angreift. Dies erhöht die Betriebssicherheit der Stützenanordnung.

Die Basis weist bevorzugt eine Ausschnittsöffnung auf. Die Ausschnittsöffnung ist gebildet durch ein Ausschneiden und Herausbiegen einer Lagernase, sodass derjenige Teil der Basis, der zuvor die Lagernase war, nun die Ausschnittsöffnung darstellt. Die Lagernase steht von dem verbleibenden Teil der Basis ab und weist bevorzugt eine Durchgangsöffnung auf. Durch die Durchgangsöffnung der Lagernase verläuft bevorzugt das Spindelelement, sodass die Lagernase zum Führen des Spindelelements an der Basis dient. Insbesondere ist die Lagernase weiter von dem Drehmomentaufnahmebereich des Spindelelements entfernt als von dem gegenüberliegenden Ende, an dem das Kraftaufnahmeelement angebracht ist. Die Halteplatte ist bevorzugt an der Ausschnittsöffnung befestigt ist. Somit ist zum Befestigen der Halteplatte insbesondere keine zusätzliche Öffnung an der Basis oder an der Stütze vorzunehmen. Vielmehr kann auf bereits vorhandene Öffnungen zurückgegriffen werden. Somit ist die Montage der Antriebsvorrichtung einfach und kostengünstig möglich.

Die Kopplung von Kraftübertragungselement und Ausgangswelle wurde vorteilhaft als Hohlwelle oder als Kettentrieb oder als Riementrieb beschrieben. Andere Mechanismen sind ebenfalls denkbar. So kann auch eine Zahnradverbindung oder eine Reibradverbindung vorgesehen sein.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine erste schematische Ansicht einer Antriebsvorrichtung gemäß einem ersten Ausführungsbeispiel der Erfindung, wobei die Antriebsvorrichtung an einer Stütze angebracht ist,
- Fig. 2: eine zweite schematische Ansicht der Antriebsvorrichtung gemäß dem ersten Ausführungsbeispiel der Erfindung, wobei die Antriebsvorrichtung an einer Stütze angebracht ist,
- Fig. 3: eine schematische Ansicht einer Halteplatte der Antriebsvorrichtung gemäß dem ersten Ausführungsbeispiel der Erfindung,
- Fig. 4: eine schematische Ansicht der Befestigung der Halteplatte der Antriebsvorrichtung gemäß dem ersten Ausführungsbeispiel der Erfindung an einer Basis, und
- Fig. 5: eine schematische Ansicht der Antriebsvorrichtung gemäß einem zweiten Ausführungsbeispiel der Erfindung.

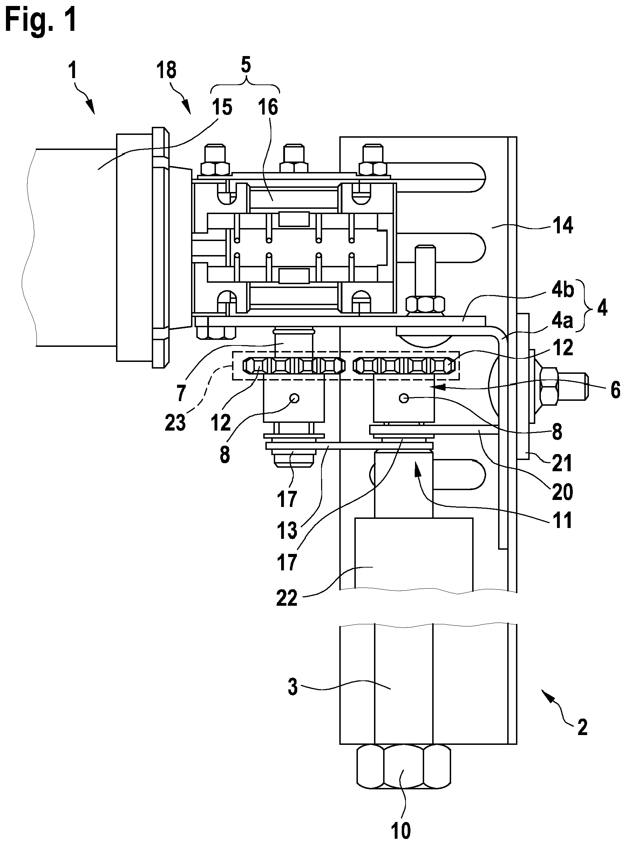

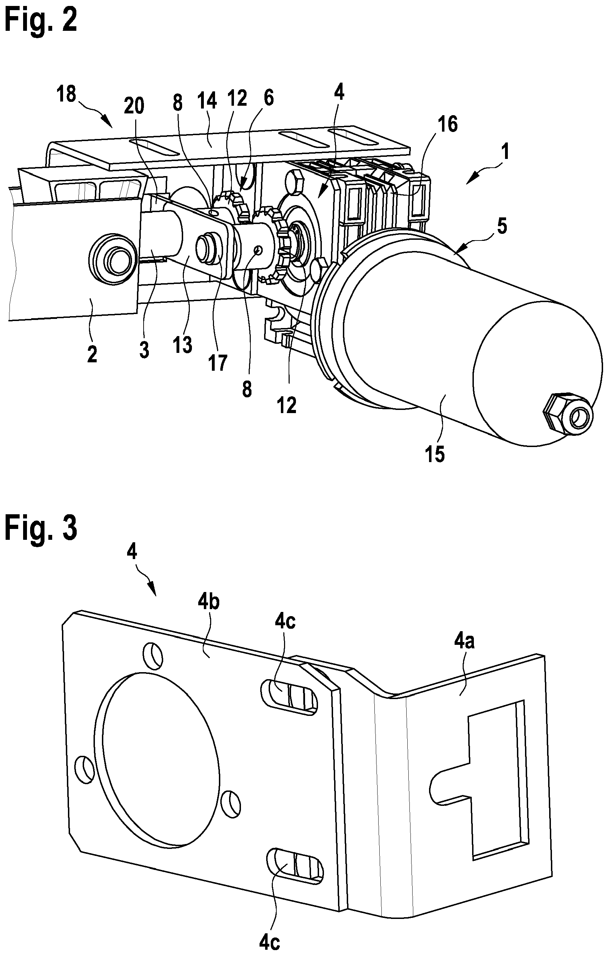

Figur 1 zeigt schematisch eine Antriebsvorrichtung 1 gemäß einem ersten Ausführungsbeispiel der Erfindung, die an einer Stütze 2 angeordnet ist, sodass eine Stützenanordnung 18 entsteht. Die Stütze 2 ist in Figur 1 nur teilweise dargestellt. Figur 2 zeigt die Antriebsvorrichtung 1 und die Stütze 2, d.h. die Stützenanordnung 18, in einer schematischen perspektivischen Ansicht. Figur 1 und Figur 2 werden nachfolgend gemeinsam beschrieben.

Die Stütze 2 weist ein Spindelelement 3 auf, das mit einer Spindelmutter 22 in Eingriff steht. Wird das Spindelelement 3 rotiert, so verschiebt sich die Spindelmutter 22 entlang dem Spindelelement 3, wodurch ein Ausfahren oder Einfahren der Stütze 2 erreicht wird. Das Spindelelement 3 kann von einem Benutzer manuell angetrieben werden, weshalb an einem Ende des Spindelelements 3 ein Drehmomentaufnahmebereich 10 ausgebildet ist, der die Form eines Mehrkants hat. Beispielsweise kann der Mehrkant ein Vierkant oder ein Sechskant sein. Der Benutzer kann somit über eine Kurbel oder dergleichen an dem Drehmomentaufnahmebereich 10 angreifen und das Spindelelement 3 rotieren.

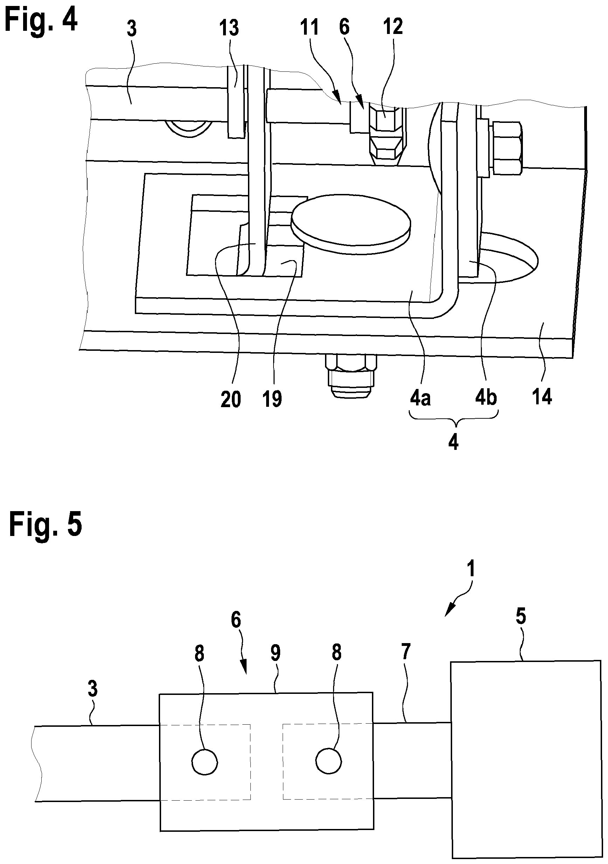

Die Stütze 2 ist an einer Basis 14 angebracht, wobei die Basis 14 bevorzugt das Fahrgestell eines Wohnwagens oder eines sonstigen Fahrzeugs ist. Das Spindelelement 3 ist an einem dem Drehmomentaufnahmebereich 10 gegenüberliegenden Ende 11 an einer Lagernase 20 der Basis 14 geführt, indem das Spindelelement 3 durch eine Durchgangsöffnung der Lagernase verläuft. Die Ausbildung der Lagernase 20 wird später mit Bezug auf Figur 4 besch rieben.

Um die Stütze 2 auch motorisiert einfahren und ausfahren zu können, ist die Antriebsvorrichtung 1 vorhanden, wobei die Antriebsvorrichtung 1 als Nachrüstsatz für die Stütze 2 ausgelegt ist. Die Antriebsvorrichtung 1 weist eine Motorvorrichtung 5 zum Erzeugen eines Drehmoments auf. Die Motorvorrichtung 5 wiederum ist in diesem Ausführungsbeispiel unterteilt in einen Elektromotor 15 und ein Getriebe 16. Das Getriebe 16 ist außerdem als Winkelgetriebe ausgebildet, sodass ein Ausgang des Elektromotors 15 und ein Ausgang des Getriebes 16 rechtwinklig zueinander angeordnet sind. Der Elektromotor 15 kann zusammen mit dem Getriebe 16 beispielsweise ein Drehmoment von 10 Nm an der Ausgangswelle 7 ausgeben, wobei eine Rotationsgeschwindigkeit beispielsweise 2*π rad*/*s* beträgt. Der Ausgang des Getriebes 16 ist eine Ausgangswelle 7 der Motorvorrichtung 5, sodass an dieser Ausgangswelle das Drehmoment aus der Motorvorrichtung 5 ausgegeben wird.

Die Antriebsvorrichtung 1 weist außerdem ein Kraftübertragungselement 6 auf. Dieses Kraftübertragungselement 6 ist an dem Spindelelement 3 der Stütze 2 befestigt und dient zur Anbindung der Motorvorrichtung 5 an das Spindelelement 3. Die Befestigung des Kraftübertragungselement 6 an dem Spindelelement 3 kann auf unterschiedliche Arten erfolgen, insbesondere kraftschlüssig und/oder formschlüssig und/oder stoffschlüssig. In dem gezeigten Ausführungsbeispiel sind Klemmelemente 8 in Form von Madenschrauben verwendet, wobei die Madenschrauben 8 bevorzugt konisch zulaufende Enden aufweisen. Somit kann durch geringfügige Verformung des Spindelelements 3 durch die Klemmelemente 8 eine Verbindung zwischen Kraftübertragungselement 6, die eine Drehmomentübertragung ermöglicht. Die Verbindung kann formschlüssig und/oder kraftschlüssig erreicht werden.

Ein Vorteil dieser Ausgestaltung ist, dass die Stütze 2 selbst nicht zu modifiziert werden braucht. Vielmehr ist ausreichend, das Kraftübertragungselement 6 an dem Spindelelement 3 zu befestigen, sodass die Antriebsvorrichtung 1 einfach und aufwandsarm an jeder Stütze 2 angeordnet werden kann, um die Stütze zu motorisieren. Die Antriebsvorrichtung 1 ist somit universell einsetzbar und ermöglicht eine kostengünstige Motorisierung jeglicher Stützen 2.

In dem gezeigten ersten Ausführungsbeispiel weist das Kraftübertragungselement 6 ein Kettenrad 12 auf. Ebenso ist ein Kettenrad 12 auf der Ausganswelle 7 der Motorvorrichtung 5 angeordnet. Das Kettenrad 12 auf der Ausgangswelle 7 ist bevorzugt auch über Klemmelemente 6 an der Ausgangswelle 7 befestigt, sodass der Aufbau hier analog zur Befestigung des Kraftübertragungselements 6 auf dem Spindelelement 3 ausgebildet ist. Über einen Kettentrieb 23 zwischen den beiden Kettenrädern 12, wobei der Kettentrieb 23 in Figur 2 nicht gezeigt und in Figur 1 schematisch dargestellt ist, erfolgt eine Kopplung von Kraftübertragungselement 6 und Ausgangswelle 7. Somit ist es der Motorvorrichtung 5 ermöglicht, das Spindelelement 3 anzutreiben. Dadurch kann die Stütze 2 durch den Antrieb der Motorvorrichtung 5 motorisiert eingefahren und ausgefahren werden. Der Kettentrieb 23 erlaubt dabei den Ausgleich von Rundlauftoleranzen und Unwuchten des Spindelelements 3, die insbesondere bei Stützen 2 geringer Qualität auftreten können. Somit ist ein zuverlässiger Antrieb des Spindelelements 3 durch die Antriebsvorrichtung 1 sichergestellt.

Um den Kettentrieb 23 unter einer vordefinierten Mindestspannung zu halten, weist die Antriebsvorrichtung 1 bevorzugt eine Halteplatte 4 und eine Abstandsplatte 13 auf. Die Abstandsplatte 13 dient zur Lagerung der Ausganswelle 7 und des Spindelelements 3. Dazu sind Gleitlager 17 vorgesehen, über die jeweils die Lagerung von Ausganswelle 7 und Spindelelement 3 an der Abstandsplatte 13 erfolgt. Dadurch ist auch ein Abstand zwischen Ausgangswelle 7 und Spindelelement 3 festgelegt. Insbesondere ermöglicht dies das Einstellen und Halten einer Vorspannung des Kettentriebs 23. Bevorzugt ist die Abstandsplatte 13 unmittelbar benachbart zu der Lagernase 20 angeordnet.

Die Halteplatte 4 dient zum Befestigen der Motorvorrichtung 5 an der Basis 14, an der auch die Stütze 2 befestigt ist. Wie insbesondere in Figur 3 gezeigt, weist die Halteplatte 4 ein L-Form auf und ist zweiteilig ausgebildet. Die Halteplatte 4 ist unterteilt in ein Montageteil 4a zur Anbindung an der Basis 14 und ein Motorhalteteil 4b. Die Motorvorrichtung 5, insbesondere das Getriebe 16, ist an dem Motorhalteteil 4b befestigt. Aufgrund der L-Form sind Montageteil 4a und Motorhalteteil 4b abgewinkelt zueinander orientiert.

Das Montageteil 4a und das Motorhalteteil 4b sind relativ zueinander verschiebbar ausgebildet, können aber auch festgestellt werden. Dies wird erreicht, indem der Motorhalteteil 4b Langlöcher 4c aufweist, über die eine Verschraubung mit dem Montageteil 4a erfolgt. Werden diese Verschraubungen gelockert, so kann aufgrund der Langlöcher 4c eine relative Verschiebung von Motorhalteteil 4b und Montageteil 4a erfolgen, um einen Abstand zwischen Basis 14 und Motorvorrichtung 5 und damit zwischen Ausgangswelle 7 und Spindelelement 3 einzustellen.

Durch die Abstandsplatte 13 und die Halteplatte 4 ist somit an zwei unterschiedlichen Positionen der Abstand zwischen Ausgangswelle 7 und Spindelelement 3 festgelegt. Insbesondere befinden sich die Kettenräder 12 der Ausgangswelle 7 und des Kraftübertragungselements 6 zwischen der Halteplatte 4 und der Abstandsplatte 13. Somit ergibt sich eine boxartige Struktur, die eine hohe Stabilität aufweist. Insbesondere wird ein geschlossener Kraftfluss erreicht, wenn der Kettentrieb 23 gespannt wird. Dieser geschlossene Kraftfluss verläuft ausgehend von der Ausgangswelle 7 über die Lagerung an der Abstandsplatte 13 und die Abstandsplatte 13 selbst zu dem Spindelelement 3, von dort weiter über die Lagernase 20 und die Basis 14 zu der Halteplatte 4 und von dort über die Motorvorrichtung 5, insbesondere das Getriebe 16, zurück zu der Ausgangswelle 7. Somit kann eine Vorspannung des Kettentriebs 23 zuverlässig gehalten werden, weswegen insbesondere sichergestellt ist, dass eine vordefinierte Mindestvorspannung nicht unterschritten ist. Auch können über diese boxartige Struktur hohe Kräfte, wie sie insbesondere bei Überlastung der Stütze 2 entstehen, aufgefangen werden, sodass eine Beschädigung der Antriebsvorrichtung 1 vermieden oder zumindest erschwert ist.

Figur 4 zeigt schematisch die Anbindung der Halteplatte 4 an der Basis 14. Die Basis 14 weist eine Ausschnittsöffnung 19 auf, die dadurch gebildet ist, dass die Lagernase 20 aus der Basis 14 ausgeschnitten und herausgebogen ist. Dies führt einerseits dazu, dass die Lagernase 20 ein Führen des Spindelelements 3 ermöglicht, andererseits, dass die Ausschnittsöffnung 19 entsteht. Die Ausschnittsöffnung 19 dient zur Befestigung der Halteplatte 4. Dazu wird das Montageteil 4a der Halteplatte 4 an der Ausschnittsöffnung 19 verschraubt. In Figur 1 ist gezeigt, dass dazu eine Gegenplatte 21 verwendet werden kann. Durch die relativ große Ausschnittsöffnung 19 ist dabei eine flexible Positionierung der Halteplatte 4 an der Basis 14 ermöglicht. Eine solche Befestigung der Halteplatte 4 ist insofern vorteilhaft, dass keine Veränderung der Basis 14 vorzunehmen ist. Es werden lediglich bereits vorhandene Öffnungen der Basis 14 verwendet.

Figur 5 zeigt schematisch ein zweites Ausführungsbeispiel der Antriebsvorrichtung 1. Dabei ist das Kraftübertragungselement 6 als Hohlwelle 9 ausgebildet. Die Hohlwelle 9 wird wiederum über Klemmelemente 8, insbesondere Schrauben, besonders bevorzugt die zuvor beschriebenen Madenschrauben, mit der Ausgangswelle 7 und dem Spindelelement 3 verbunden. Somit ist eine direkte Übertragung von Drehmoment von der Motorvorrichtung 5 an das Spindelelement 3 ermöglicht. Bei einer solche Anordnung ist besonders vorteilhaft, wenn die Motorvorrichtung 5 über ein biegeweiches Element, beispielsweise ein biegeweiche Ausführung der beschriebenen Halteplatte 4, an der Basis 14 befestigt ist. Somit kann die biegeweise Befestigung der Motorvorrichtung 5 einen Toleranzausgleich von Rundlauftoleranzen des Spindelelements 3 ermöglichen.

Neben der vorstehenden schriftlichen Beschreibung der Erfindung wird zu deren ergänzender Offenbarung hiermit explizit auf die zeichnerische Darstellung der Erfindung in den Fig. 1 bis 5 Bezug genommen.

### Bezugszeichenliste

- 1: Antriebsvorrichtung
- 2: Stütze
- 3: Spindelelement
- 4: Halteplatte
- 4a: Montageteil
- 4b: Motorhalteteil
- 4c: Langloch
- 5: Motorvorrichtung
- 6: Kraftübertragungselement
- 7: Ausgangswelle
- 8: Klemmelement
- 9: Hohlwelle
- 10: Drehmomentaufnahmebereich
- 11: gegenüberliegendes Ende
- 12: Kettenrad
- 13: Abstandsplatte
- 14: Basis
- 15: Elektromotor
- 16: Getriebe
- 17: Gleitlager
- 18: Stützenanordnung
- 19: Ausschnittöffnung
- 20: Lagernase
- 21: Gegenplatte
- 22: Spindelmutter
- 23: Kettentrieb

## Patentansprüche

1. Antriebsvorrichtung (1) für eine über ein, mit einem Drehmomentaufnahmebereich (10) versehenes, Spindelelement (3) ausfahrbare Stütze (2), die Antriebsvorrichtung (1) aufweisend:
• eine Halteplatte (4), die eingerichtet ist, an der Stütze (3) oder an einer die Stütze haltenden Basis (14) befestigt zu werden,
• eine Motorvorrichtung (5) zum Ausgeben eines Drehmoments, wobei die Motorvorrichtung (5) an der Halteplatte (4) befestigbar ist, und
• ein Kraftübertragungselement (6), das eingerichtet ist, an einem dem Drehmomentaufnahmebereich (10) gegenüberliegenden Ende (11) des Spindelelements (3) formschlüssig und/oder stoffschlüssig und/oder kraftschlüssig verbunden zu werden, um ein Drehmoment auf das Spindelelement (3) aufzubringen,
• wobei das Kraftübertragungselement (6) mit einer Ausgangswelle (7) der Motorvorrichtung (5) zur Drehmomentübertragung gekoppelt ist.

2. Antriebsvorrichtung (1) nach Anspruch 1, **dadurch gekennzeichnet, dass** das Kraftübertragungselement (6) zumindest ein Klemmelement (8), insbesondere zumindest eine Schraube, aufweist, durch das eine reibschlüssige Verbindung zwischen Kraftübertragungselement (6) und Spindelelement (3) und/oder durch Verformung des Spindelelements (3) durch das Klemmelement (8) eine formschlüssige Verbindung zwischen Kraftübertragungselement (6) und Spindelelement (3) realisierbar ist.

3. Antriebsvorrichtung (1) nach einem der vorhergehenden Ansprüche, **dadurch gekennzeichnet, dass** das Kraftübertragungselement (6) als Verbindungswelle, insbesondere Hohlwelle (9), ausgebildet ist, durch die die Ausgangswelle (7) der Motorvorrichtung (5) direkt mit dem Spindelelement (3) zur Drehmomentübertragung verbindbar ist.

4. Antriebsvorrichtung (1) nach einem der vorhergehenden Ansprüche, **dadurch gekennzeichnet, dass** das Kraftübertragungselement (6) ein Kettenrad (12) und/oder ein Riemenrad aufweist, wobei die Kopplung mit der Ausgangswelle (7) der Motorvorrichtung (5) über einen Kettentrieb und/oder einen Riementrieb erfolgt.

5. Antriebsvorrichtung (1) nach einem der vorhergehenden Ansprüche, **dadurch gekennzeichnet, dass** die Halteplatte (4) L-förmig ausgebildet ist und ein Montageteil (4a) zur Befestigung an der Stütze (2) oder der Basis (14) sowie ein Motorhalteteil (4b) zur Aufnahme der Motorvorrichtung (5) aufweist, wobei das Montageteil (4a) und das Motorhalteteil (4b) zur Einstellung eines Abstands zwischen Ausgangswelle (7) und Spindelelement (3) relativ zueinander verschiebbar sowie aneinander feststellbar ausgebildet sind.

6. Antriebsvorrichtung (1) nach Anspruch 5, **dadurch gekennzeichnet, dass** das Montageteil (4a) und das Motorhalteteil (4b) über eine Verschraubung verbunden sind, wobei das Montageteil (4a) und/oder das Motorhalteteil (4b) Langlöcher (4c) aufweist, die die relative Verschiebbarkeit von Montageteil (4a) und Motorhalteteil (4b) sicherstellen.

7. Antriebsvorrichtung (1) nach einem der vorhergehenden Ansprüche, **gekennzeichnet durch** eine Abstandsplatte (13), an der die Ausgangswelle (7) und das Spindelelement (3) lagerbar sind, um einen Abstand zwischen Ausgangswelle (7) und Spindelelement (3) festzulegen, wobei das Kraftübertragungselement (6) bevorzugt zwischen der Abstandsplatte (13) und der Halteplatte (4) angeordnet ist.

8. Antriebsvorrichtung (1) nach Anspruch 7, **dadurch gekennzeichnet, dass** die Ausgangswelle (7) und das Spindelelement (3) über jeweils ein Gleitlager (17) an der Abstandsplatte (13) gelagert sind.

9. Antriebsvorrichtung (1) nach einem der vorhergehenden Ansprüche, **dadurch gekennzeichnet, dass** die Motorvorrichtung (5) einen Elektromotor (15) und ein direkt mit dem Elektromotor (15) verbundenes Getriebe (16) aufweist, wobei die Ausgangswelle (7) der Motorvorrichtung (5) ein Ausgang des Getriebes (16) ist.

10. Stützenanordnung (18) aufweisend eine Antriebsvorrichtung (1) nach einem der vorhergehenden Ansprüche und eine Stütze (2) mit einem Spindelelement (3), wobei das Spindelelement (3) an einem Ende einen Drehmomentaufnahmebereich (10) aufweist, wobei an einem dem Drehmomentaufnahmebereich (10) gegenüberliegenden Ende (11) des Spindelelements (3) das Kraftübertragungselement (6) der Antriebsvorrichtung (1) angebracht ist, und wobei Stütze (2) und Antriebsvorrichtung (1) an einer gemeinsamen Basis (14) befestigt sind.

11. Stützenanordnung (18) nach Anspruch 10, **dadurch gekennzeichnet, dass** die Basis (14) eine Ausschnittsöffnung (19) aufweist, die durch Ausschneiden und Herausbiegen einer Lagernase (20) gebildet ist, wobei das Spindelelement (3) durch eine Durchgangsöffnung der Lagernase (20) verläuft und wobei die Halteplatte (4) an der Ausschnittsöffnung (19) befestigt ist.
